(19) **Europäisches Patentamt / European Patent Office / Office européen des brevets**

(11) **EP 3 325 559 B1**

(12) **EUROPEAN PATENT SPECIFICATION**

(45) Date of publication and mention
of the grant of the patent:
**27.05.2020 Bulletin 2020/22**

(51) Int Cl.:
***C09C 1/24*** *(2006.01)*     ***C09C 1/62*** *(2006.01)*

(21) Application number: **16751059.3**

(86) International application number:
**PCT/US2016/043486**

(22) Date of filing: **22.07.2016**

(87) International publication number:
**WO 2017/019480 (02.02.2017 Gazette 2017/05)**

(54) **DISPERSANT EFFECT ON ALUMINUM PIGMENTS**

DISPERSIONSWIRKUNG AUF ALUMINIUMPIGMENTEN

EFFET DISPERSANT SUR DES PIGMENTS D'ALUMINIUM

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.07.2015 US 201562196417 P**

(43) Date of publication of application:
**30.05.2018 Bulletin 2018/22**

(73) Proprietor: **Sun Chemical Corporation
Parsippany, NJ 07054-1285 (US)**

(72) Inventors:
• **JOHNSON, Steven
Fairfield, OH 45014 (US)**
• **DOLL, Jonathan
Cincinnati, OH 45213 (US)**
• **CLAPP, Lisa
Cincinnati, OH 45249 (US)**

(74) Representative: **Carpmaels & Ransford LLP
One Southampton Row
London WC1B 5HA (GB)**

(56) References cited:
**WO-A1-00/24946          WO-A1-2014/042639
US-A1- 2005 244 584**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Description

BACKGROUND

VMP (Vacuum Metalized Pigments) aluminum pigments are a type of platelet-shaped aluminum pigment that has a thickness on the order of 5-50 nm. This is in direct comparison to aluminum pigments produced by milling, which have a thickness on the order of 100-600 nm. In addition, the surface of VMP aluminum pigments is extremely smooth when compared to milled pigments. The combined smoothness and thinness of VMP aluminum pigments leads to mirror or liquid chrome-like effects when the pigments are printed.

Typically, VMP aluminum pigments are supplied as a low-solids slurry, because their extreme thinness and lack of a surface treatment causes them to aggregate if they are stored as a paste or powder. Typically, the solids contents of such VMP aluminum pigment slurries is kept at or near 10% in an acetate solvent like ethyl acetate or isopropyl acetate. Above 10% solids content, VMP aluminum pigment slurries tend to become extremely viscous and thixotropic, making them hard to use. Below 10%, the formulation flexibility for VMP aluminum pigment slurries is reduced.

There are two main problems associated with VMP aluminum pigment slurries that has hindered their widespread usage. The first problem is that because they are typically supplied with a low, 10% solids content, formulators have a difficult time working with them for certain applications. The second problem is that VMP aluminum pigments have been shown to be incompatible with systems that contain a large amount of alcohol. This limits their use to gravure inks and nonalcoholic coatings applications, while making their application in flexographic ink difficult to impossible.

When VMP aluminum pigments are introduced into alcohol based systems, the viscosity increases and the appearance in printed films is poor. Instead of the smooth, mirror-like appearance seen in displays of VMP aluminum pigments made using ester-based gravure inks, alcohol-based VMP aluminum pigments will aggregate and look transparent or with little metallic effect. WO 2014/042639 A1 discloses a method to obtain a vacuum metallized aluminum pigment in which the release layer comprises a dispersing agent. After the vacuum release the obtained product is treated with solvents and a slurry comprising the VMP is obtained.

In the present application, we report a pigment preparation comprised of an aluminum pigment, a dispersing additive, which may be one or more dispersants and/or surfactants, and a solvent, that can either 1) reach high, >10% solids with favorable rheology; 2) be formulated into high alcohol systems; or 3) both. The pigment preparation of the present application has better formulation flexibility than other VMP aluminum pigment slurries currently available on the market.

A key feature of the present technology is the fortuitous selection of the dispersing additive in the pigment preparation. The dispersing additive is generally a surfactant of some sort. We show that 1) the addition of surfactant results in improved viscosity of VMP aluminum slurry; 2) improved dispersion and better alignment of aluminum particles in high-alcohol flexographic and gravure ink systems containing VMP aluminum pigments; and 3) enhanced dispersion of conventionally milled aluminum pigments resulting in improved alignment of the aluminum particles and increase in strength.

BRIEF SUMMARY

The present application provides a unique solution that directly integrates into current manufacturing processes.

Additionally, we have found that: 1) the use of a dispersing additive allows for increasing the solids content of the VMP slurry while maintaining or improving physical handling of the VMP slurry; and 2) the use of a dispersing additive improves the printing characteristics of VMP & conventionally milled aluminum pigments. Both of these features provide significant advantages for end users that improves on the current state of the art.

DETAILED DESCRIPTION

VMP aluminum pigments are made by vapor depositing a thin (10-50 nm) layer of aluminum metal onto a soluble, polymeric release layer that has been sprayed on an insoluble substrate. The pigments are made by dissolving the release layer in a solvent to free the thin aluminum film. The aluminum film is them comminuted to a specific size distribution to make the VMP pigments. The pigments themselves are platelet shaped, with the diameter describing the largest dimension of the flakes. The surface of VMP pigments is extremely smooth, and thus they are typically used to make so-called mirror or chrome effects when printed.

The VMP pigments are provided as a slurry in a solvent, usually ethyl acetate, and are used as colorants in inks, coatings and certain cosmetic applications, such as nail polish. A significant limitation of using VMP pigments is that they have proven to be incompatible with formulations that contain high (>50%) concentrations of an alcoholic solvent like ethanol or n-isopropanol.

If a VMP pigment slurry is made in an alcoholic solvent at equal concentrations to a corresponding ethyl acetate slurry, it is observed that the rheology of the ethanol slurry is high, leading to unfavorable interactions when put into an ink. This means that VMP pigment slurries can only be used in applications where high amount of ester solvents can be tolerated, such as gravure inks, while limiting their widespread use in applications that require low ester/high-alcohol contents, like flexographic inks.

While not being bound by theory, it is thought that this issue arises because the polymeric release layer is not completely removed from the system. In fact, it is further hypothesized that residual amounts of this release layer are present in the VMP slurry and/or bound to the surface of the VMP pigments. In ethanol-based slurries, it is believed that the solubility of the release layer changes, causing the VMP pigments to lightly flocculate and resulting in an aggregated appearance that does not have the characteristic chrome effect of VMP pigments. To date, it is believed that the only way to solve the alcohol-compatibility issue of VMP pigments was to change the release layer used in their manufacture. In the technology described herein, we have discovered that VMP pigments can be made compatible with alcohol-based formulations through the use of a dispersing additive.

While not being bound by theory, the exact function of this dispersing additive is unknown, it is believed to treat the surface of the VMP aluminum pigment, making it and any residual release polymer compatible in alcoholic solutions. It is the first time that a solution for the alcohol-compatibility issue of VMP pigments has been reported.

In the present application, we describe a VMP pigment slurry that contains one or more VMP pigments, one or more solvents and one or more dispersing additives and can be formulated into both alcohol-based and ester-based coating and ink formulations. The pigment preparations have a low viscosity, even at high pigment loadings and greatly improve the formulation flexibility in all formulations. Displays made from alcohol-based inks containing the inventive VMP pigment slurries have an excellent chrome-like luster and mirror finish. All of these properties combine to give a unique product that improves formulation flexibility and expands the palette of usable solvents, and therefore end applications, for formulation with VMP pigments. The current technology describes a VMP pigment preparation comprised of an aluminum pigment, a dispersing additive, a solvent and additionally an optional further additive. This VMP pigment preparation allows for the incorporation of VMP pigments into high-alcohol formulations. It has also been found the VMP pigment preparation of the current technology are made and favorable rheology and reduced thixotropy as is typically observed in currently known VMP pigment preparations. Finally, when the VMP pigment preparation of the current technology is incorporated into, for example, an alcohol-based flexographic ink, it is observed that the resulting displays have an excellent mirror finish with low transparency and little sign of aggregation. A method to make the VMP pigment preparation and the use thereof is also described.

VMP pigments are flake-shaped metallic pigments that are produced by first vapor-depositing a metal onto a soluble release layer or polymer coated onto an insoluble substrate, and subsequently separating the metallic film from the substrate by dissolving the release layer. The separated metallic film is then washed and comminuted and supplied as a slurry in a solvent.

In one embodiment, the VMP pigment preparation contains a VMP pigment, and a dispersing additive dispersed in a solvent to make a slurry. The typical loading, by weight, of the VMP pigment in the VMP pigment preparation is about 1-40%, or about 2-20% or about 5-15%, with respect to the total weight of the VMP pigment preparation.

In one embodiment, the VMP pigment is made from a metal. In one embodiment, the VMP pigment is made from aluminum. In one embodiment, the VMP pigment is made from one or more of metals in the following group including but not limited to aluminum, copper, zinc, chromium, bronze, brass, silver, gold, titanium, steel, iron, magnesium, nickel, tin, copper-zinc alloys, copper-tin alloys, copper-aluminum alloys, aluminum-zinc alloys, zinc-magnesium alloys, and mixtures and alloys of any of the preceding.

In one embodiment, the VMP pigment is comprised of a distribution of differently sized particles. In this case, the VMP pigment has a particle size distribution comprised of particles of differing thickness and diameter. By thickness, it is meant the dimension of the VMP pigment flake that is perpendicular to the largest dimension of the flake. By diameter, it is meant the largest dimension of the VMP pigment flake. For the VMP pigment, a range of thickness, h, is acceptable. The VMP pigment has a median diameter, $d_{50}$, in the range from about 1-500 $\mu$m or about 1-100 $\mu$m, or about 1-20 $\mu$m. The median thickness, $h_{50}$, of the VMP pigment may lie in the range of 1 nm to 150 nm, or from about 5-50 nm.

The VMP pigment may be supplied in dry or wet form. If the VMP pigment is supplied in dry form it can be supplied as a pellet or a powder. If the VMP pigment is supplied in wet form, it can be supplied as a paste or as a slurry in a solvent. In the case of a paste, the VMP pigment content may be in the range of 35-95% by weight with respect to the total weight of the paste. In the case of a slurry, the VMP pigment content may be in the range of 1-35% by weight with respect to the total weight of the paste. In the case of a paste or a slurry, the solvent that the VMP pigment is supplied in is not critical, and may include but is not limited to water, ethyl acetate, n-propyl acetate, isopropyl acetate, propyl acetate, n-butylacetate, isobutyl acetate, sec-butyl acetate, tert-butyl acetate, butyl acetate, methanol, ethanol, propanol, n-propanol, isopropanol, butanol, n-butanol, isobutylalcohol, tertbutylalcohol, acetone, mineral spirits, hexane, heptane, decane, kerosene, mineral oil, propylene glycol mono methyl ether, methyl ethyl ketone, diethyl ether, toluene, xylene, butyl cellusolve, ethylene glycol monobutyl ether, butyl glycol, glycerol, methoxy methyl butanol, methoxy propyl acetate, and others known to those skilled in the art, as well as mixtures thereof.

In one embodiment, the VMP pigment may have a coating. If a coating is present, any type of coating for VMP pigments known to those skilled in the art may be allowed. The coating may be organic or inorganic in nature. Additionally, the coating may be a mixture of inorganic and organic components. The coating may be a single layer or have multiple layers.

In one embodiment, the coating is organic. If the coating is organic, the coating may be of a small molecule or a polymer. Suitable types of small molecule organic coatings include, but are not limited to, saturated fatty acids, monounstaturated fatty acids, polyunsaturated fatty acids, stearic acid, oleic acid, ricinoleic acid, myristic acid, arachidic acid, linoleic acid, lauric acid, palmitic acid, palmitoleic acid, elaidic acid, erucic acid, triphenyl phosphate, trioctyl phosphate, butyl acid phosphate, octylphosphonic acid, lauryl phosphonic acid, octylphosphite, octadecyl phosphite, octadecyl phosphonic acid, and mixtures thereof. Other types of small molecule organic coatings include sulfates and sulfonates.

In one embodiment, the coating is a polymer. If the coating is a polymer, then any molecular weight is acceptable. Suitable molecular weights for the polymer are in the range of 1,000 g/mol - 1,000,000 g/mol. Suitable types of polymer coatings include, but are not limited to poly(acrylic acid), poly(styrene), poly(ethylene), poly(propylene), poly(maleic anhydride), poly(methylmethacrylate), polymethacrylic acid, poly(dimethylsiloxane), poly(vinylalcohol), poly(styrene), poly(maleic anhydride), poly(ethylmethacrylate), poly(isobutylmethacrylate), poly(methacrylate), poly(butylmethacrylate), poly(n-butylmethacrylate), and mixtures or random, block, or alternating copolymers thereof.

In one embodiment, the coating may be inorganic. If the coating is inorganic, it may be a metal oxide. Metal oxides used to coat the VMP pigment may include, but is not limited to silicon dioxide, titanium dioxide, zinc oxide, zirconium dioxide, tin oxide, cerium dioxide, vanadium (IV) oxide, manganese oxide, lead oxide, chromium oxide, iron oxide, aluminum oxide, tungsten oxide, and mixtures and alloys thereof. The coating may also be comprised of a hydrated oxide of any one of the aforementioned oxides. The coating may also be a doped oxide of any one of the aforementioned. The thickness of the metal oxide layers are variable but must allow for partial transparency. In general, the thickness of the metal oxide layers is preferably in the range of about 20 nm to 350 nm.

The VMP pigment preparation of the current technology contains dispersing additive, which can be one or more dispersants or surfactants. The dispersing additive is present in the VMP pigment preparation at a preferable loading in the range of 1-50% by weight, or 1-30% by weight, or 2-15% by weight, with respect to the total weight of the VMP pigment in the VMP pigment preparation.

The dispersant in the VMP pigment preparation is a dispersing additive of the formulation represented in equation 1:

$$A_l B_m X_n R_p \quad \text{(equation 1)}$$

Where A is an optional conjugate acid to moiety, B, that has a negative charge or a lone pair of electrons; R is a tail group that aids in dispersion; X is a linker that covalently connects moiety B to tail group R; 1 is the number of conjugate acid A and is equal to the valency of moiety B times the number, m, of moiety B divided by the valency of the conjugate acid A; n is the number of linker molecules X; and p is the number of tail groups R.

The dispersant has a moiety, B. In one embodiment, moiety B of the dispersant is a hard base. A hard base functional group can mean any hard Lewis base as defined by Pearson's hard and soft acids and bases (HSAB) theory. By definition, hard bases are characterized as having small ionic radii, having electronegative atomic centers, being weakly polarizable and are difficult to oxidize. Moiety B of the dispersant is selected from primary aliphatic amines, primary aromatic amine, secondary amines, tertiary amines, alcohol, ketone, carboxylates, phosphate, phosphite, sulfate, sulfite, hydroxyl, or nitro groups.

In some embodiments, moiety B is a charged functional group. If moiety B is charged, a conjugate acid, A, will be present in in the dispersant. The conjugate acid A will have an opposite charge to moiety B. Conjugate acids A are any cationic species selected from $H^+$, $Li^+$, $Na^+$, $K^+$, $Rb^+$, $Cs^+$, $Ag^+$, $Cu^+$, $NH_4^+$, $(CH_3)_4N^+$, $Mg^{2+}$, $Ca^{2+}$, $Sr^{2+}$, $Ba^{2+}$, $Zn^{2+}$, $Cd^{2+}$, $Co^{2+}$ $Cu^{2+}$, $Fe^{2+}$, $Mn^{2+}$, $Ni^{2+}$, $Sn^{2+}$, $Hg^{2+}$, $Pb^{2+}$, $Al^{3+}$, $Cr^{3+}$, $Fe^{3+}$ or mixtures thereof.

In one embodiment, an amount, m, of moiety B is present in the dispersant, where m describes the amount of moiety B that is present in a single molecule of the dispersant. The number of moiety B that is present in the dispersant in the range of $1 < m \leq 30$. If moiety B is charged, then 1*, the number of conjugate acid, A, is equal to the valency of B ($V_B$) times m divided by the valency of A (VA) or by equation 2.

$$l = mV_B/V_A \quad \text{(equation 2)}$$

(*note: this is the small case letter "L" <u>not</u> the number "1")

The dispersant has a tail group R. The tail group R is covalently bonded to a linker, X, that is also covalently bonded to moiety B. Tail group R is a linear, branched, or dendritic polymer chain with a molecular weight in the range of about 100 g/mol to about 5,000,000 g/mol selected from

poly(ethylene), poly(propylene), poly(butylene), poly(isobutylene), poly(isoprene), poly(acetal), poly(ethylene glycol), poly(propylene glycol), poly(butylene glycol), poly(methylmethacrylate), poly(dimethylsiloxane), poly(vinylalcohol), poly(styrene), poly(maleic anhydride), poly(ethylmethacrylate), poly(isobutylmethacrylate), poly(methacrylate), poly(butylmethacrylate), poly(n-butylmethacrylate), poly(vinyl butyrate), poly(vinyl chloride), polysiloxane, and mixtures or random, block, or alternating copolymers thereof.

In one embodiment, the dispersant has an amount of tail group R, which is p, and p describes the amount of tail group R that is present on a single molecule of the dispersant. The number of tail group R that is present on the dispersant in the range of $1<p\leq10$. If more than one R-group is present on the dispersant, they may be identical or they may be different without affecting the scope of the technology.

In some embodiments, the tail group R is connected to moiety B through a linker X. The linker X may be a small molecule or it may be a polymer. If the linker X is a small molecule, then up to 2 moieties B and up to two tail groups R may be covalently bonded to linker X. Suitable types of chemical moieties for linker X if it is a small molecule may include but is not limited to C1-C20 alkyl groups, arylene, alkylarylene, arylalkylene, alkylineamino, alkylineimino, alkylneoxyalkylene, aryleneoxy, aryleneoxyalkylene, oxaalkylene, oxyalkylene, dioxy alkylene, oxyarylene, or heterocycle.

If the linker X is a polymer, then multiple moieties B and tail groups R up to the degree of polymerization of linker X can be present. In the case where the linker X is a polymer, multiple moieties B and tail groups R may be attached to the polymer. In the case where the linker X is a polymer, moiety B may be covalently bonded to anywhere from 0.1-99.9% or the available attachment points of linker X. In the case where the linker X is a polymer, tail group R may be covalently bonded to anywhere from 0.1-99.9% or the available attachment points of linker X.

A partial list of preferred commercial dispersing additives includes but is not limited to Solplus D540 (Lubrizol), Solplus D541 (Lubrizol), Solplus D570 (Lubrizol), Solsperse 65000 (Lubrizol), Tego 656 (Evonik), Disperbyk 111 (Altana), Disperbyk 180 (Altana) and SFD-R255 (Sun Chemical).

The VMP pigment preparation of the present application contains a solvent. In the current technology, the VMP pigment is dispersed into a solvent. The typical loading, by weight, of the solvent is about 40-98.9% with respect to the total weight of the VMP pigment preparation. Generally, if it is supplied dry, then the VMP pigment is directly dispersed into the solvent to make the VMP pigment slurry. If the VMP pigment is supplied wet, then the VMP pigment is solvent exchanged or washed into the solvent used in the VMP pigment preparation. In one embodiment, the solvent used in the VMP pigment preparation is an ester. In another embodiment, the solvent used in the VMP pigment preparation is an alcohol. In another embodiment, the solvent used in the VMP pigment preparation is a miscible blend of ester and alcohol. If the solvent is a blend of ester and alcohol, then the ratio by weight of ester to alcohol can range from about 0.1% - 100% and about 100% - 0.1%. The VMP pigment preparation can contain more than one type of ester solvent and/or more than one type of alcohol solvent without limiting the scope of the technology.

Examples of an ester-type solvent may include but are not limited to methyl acetate, ethyl acetate, n-propyl acetate, 1-propyl acetate, isopropyl acetate, n-butyl acetate, isobutyl acetate, sec-butyl acetate, tert-butylacetate, ethyl butyrate, ethyl lactate, hexyl acetate, isoamyl acetate, methyl propionate, and mixtures and blends thereof.

Examples of an alcohol-type solvent include but are not limited to methanol, ethanol, n-propanol, 1-propanol, isopropanol, n-butanol, 1-butanol, 2-butanol, isobutanol, tert-butanol, benzyl alcohol, ethylene glycol, diethylene glycol, 2-ethylhexanol, glycerol, methyl carbitol, 2-methyl-1-butanol, 3-methyl-2-butanol, 1,2-propanediol, 1,3-propane diol, propylene glycol, propylene glycol monomethyl ether, propylene glycol monomethyl ether acetate, propylene glycol mono-n-propyl ether, propylene glycol mono-n-butyl ether, propylene glycol mono-t-butyl ether, propylene glycol monophenyl ether, dipropylene glycol monomethyl ether, dipropylene glycol monomethyl ether acetate, dipropylene glycol dimethyl ether, dipropylene glycol mono-n-butyl ether, dipropylene glycol mono-t-butyl ether, dipropylene glycol mono-n-propyl ether, tripropylene glycol monomethyl ether, tripropylene glycol mono-n-propyl ether, tripropylene glycol mono-n-butyl ether and mixtures and blends thereof.

In one embodiment, another solvent type may optionally be added to the VMP pigment preparation in addition to and ester and/or alcohol-type solvent. Examples of other solvents that can be used can be one or more from the following list including, but not limited to, water, acetone, methyl ethyl ketone, tetrahydrofuran, diacetone alcohol, morpholine, isophorone, mesityl oxide, methyl isobutyl ketone, pentane, hexane, cyclohexane, heptane, octane, nonane, decane, kerosene, gasoline, mineral spirits, mineral oil, toluene, xylene, 2-butanone, diethyl ether, diethylene glycol dimethyl ether, nitromethane, triethyl amine, pyridine, and mixtures and blends thereof.

In one embodiment, the VMP pigment preparation of the current technology may contain an additional additive without limiting the scope of the current technology. Examples of additional additives include but are not limited to codispersants, cosolvents, organic pigments, inorganic pigments, pearlescent pigments, metallic pigments, emulsifiers, thickeners, rheology modifiers, coalescing agents, waxes, resins, binders, varnishes, fillers, or other types of additives known to those skilled in the art.

In one embodiment, the VMP pigment preparation of the current technology may contain a binder. In the case where the VMP pigment preparation contains a binder, then the binder is added in the range of 0.01-20% with respect to the total weight of the slurry. Examples of the type of resin varnish or binder include but are not limited to poly(esters), poly(urethanes), poly(vinyls), poly(ethylenes), poly(propylenes), celluloses, poly(vinyl butyrates), poly(maleic anhydrides), poly(styrenes), cellulose acetates, cellulose acetate propionates, cellulose acetate butyrates, poly(vinyl alcohols), poly(amides), nitrocelluloses, acrylics, alkyds, fluorinated resins or any mixture, or block, random or alternating copolymer, thereof.

In one embodiment, the method to make the VMP pigment preparation comprises the following steps of optionally diluting the starting VMP pigment in a solvent, removing or partially removing the solvent of the initial VMP slurry, washing the VMP pigment with a chosen solvent, adding the dispersing agent and diluting with the new solvent.

In one embodiment, the method to make the VMP pigment preparation is optionally initiated by diluting the starting VMP slurry. In the instance where this step is taken, the diluting solvent is added while mixing to yield a slurry with a preferred VMP pigment content of about 1% to about 40% by weight. The type of solvent used in this step is not critical, however it should be miscible with any solvent that is present in the initial VMP pigment if the initial VMP pigment is supplied as a paste or a slurry. Examples of suitable solvents to use for the optional dilution step include but are not limited to water, ethyl acetate, n-propyl acetate, isopropyl acetate, propyl acetate, n-butylacetate, isobutyl acetate, sec-butyl acetate, tert-butyl acetate, butyl acetate, methanol, ethanol, propanol, n-propanol, isopropanol, butanol, n-butanol, isobutylalcohol, tertbutylalcohol, acetone, mineral spirits, hexane, heptane, decane, kerosene, mineral oil, propylene glycol monomethyl ether, methyl ethyl ketone, diethyl ether, toluene, xylene, butyl cellusolve, ethylene glycol monobutyl ether, butyl glycol, glycerol, methoxy methyl butanol, methoxy propyl acetate, and others known to those skilled in the art, as well as mixtures thereof.

In one embodiment, the method is initiated by removing the solvent from the VMP pigment to make a VMP pigment concentrate. In the case where the VMP pigment has been optionally diluted, removing the solvent to make a VMP pigment concentrate may be done in a second step. The method to remove the solvent is not particularly important, and the solvent can be removed by any method known to those skilled in the art. In one embodiment, the solvent is removed by vacuum drying in an oven. In another embodiment, the solvent is removed by filtering. In another embodiment, the solvent is removed by centrifugation followed by decanting. In each of these methods, the solvent is removed to yield a VMP pigment concentrate with a known solids content. Generally, the solvent is removed to give a VMP pigment concentrate that contains about 10% to about 100% by weight of pigment and about 0% to about 90% of solvent.

Following removal of the solvent, the VMP pigment is may be washed. The VMP pigment is preferably washed by adding another solvent, mixing well and then removing the solvent to yield a concentrate with a specific amount of VMP pigment. The washing step can be repeated multiple times to get the desired level of purity in the VMP pigment preparation of the current technology. In one embodiment, the washing step is a repetition of the dilution and solvent removal step. In another embodiment, the washing step is done with a different solvent than in the dilution step.

Following the washing step, the additive dispersing agent is preferably added and the VMP concentrate is diluted with a solvent to make the VMP pigment preparation of the current technology. Generally, the dispersing agent is metered into the VMP concentrate to give a final loading of about 1% to about 50% with respect to the total weight of the VMP pigment. The speed at which the dispersant is added is not critical, and it can be added all at once or it can be added slowly in a continuous or discontinuous fashion. The dispersing additive can be added either before, after, or at the same time the solvent is added.

In one embodiment, the dilution with a solvent is done with an alcohol type of solvent. In one embodiment, the dilution with a solvent is done with an ester type of solvent. In one embodiment, the dilution with a solvent is done with a blend of ester and alcohol solvents. In one embodiment the dilution with a solvent is done with a blend of organic solvent with an alcohol or an ester solvent. If the diluting solvent is a blend of ester and alcohol, then they may be added separately or simultaneously. If the solvent is a blend of ester and alcohol, then the ratio by weight of ester to alcohol can range from 0% - 100% to 100% to 0%. Generally, the VMP pigment concentrate is diluted such the concentration of the VMP pigment is about 1% to about 40% by weight with respect to the total weight of the VMP pigment preparation.

In one embodiment, the method to make the VMP pigment preparation of the current technology involves adding an additional additive after dilution. Examples of additional additives include but are not limited to codispersants, cosolvents, organic pigments, inorganic pigments, pearlescent pigments, metallic pigments, emulsifiers, thickeners, rheology modifiers, coalescing agents, waxes, resins, binders, varnishes, fillers, or other types of additives known to those skilled in the art, and should be added according to the manufacturer's instructions.

The current technology also relates to an ink or coating that contains the VMP pigment preparation. Both water and organic solvent-based systems can be used as the ink or the coating. The coating system may also be energy curable.

The content of the VMP pigment preparation in the ink or coating is added so that the total amount of VMP pigment in the final ink or coating is in the range of about 0.1% to about 15%, or from about 0.2-10%.

The ink or coating composition of the present application is obtained by blending the VMP pigment preparation of the present application with a resin, varnish or binder. The resin, varnish or binder is added so that the weight ratio of VMP pigment to resin, varnish or binder is in the range of about 0.5 to about 5.0. Examples of the type of resin varnish or binder include but are not limited to poly(esters), poly(urethanes), poly(vinyls), poly(ethylenes), poly(propylenes), celluloses, poly(vinyl butyrates), poly(maleic anhydrides), poly(styrenes), cellulose acetates, cellulose acetate propionates, cellulose acetate butyrates, poly(vinyl alcohols), poly(amides), nitrocelluloses, acrylics, alkyds, fluorinated resins or any mixture, or block, random or alternating copolymer, thereof.

The ink or coating composition according to the present technology may contain another colored pigment, effect pigment, extender or dye may be employed in addition to the VMP pigment preparation. Illustrative examples of the color pigment include but are not limited to azo pigments, polycyclic pigments, anthraquinone pigments including monoazo pigments, disazo pigments, disazo condensation pigments, naphthol pigments, benzimidazolone pigments, isoindolinone pigments, isoindoline pigments, metal complex pigments, quinacridone pigments, perylene pigments, carbon black pigments, phthalocyanine pigments, perinone pigments, diketopyrrolo-pyrrole pigments, thioindigo pigments, anthropyrimidine pigments, flavanthrone pigments, anthanthrone pigments, dioxazine pigments, triarylcarbonium pigments, quinophthalone pigments, titanium oxides, iron oxides, vanadium oxides, chromium oxides, zinc oxides, copper oxides, manganese oxides, azurite, zinc chromates, tungsten oxides, cadmium sulfides, zinc sulfides, cadmium mercury sulfides, iron sulfides, aluminosilicates, aluminum oxides, cerium oxides, spinel pigments, lanthanum hexaborides, or any combination thereof.

Illustrative examples of the effect pigment include but are not limited to flake-form pigments of titanium dioxide coated mica, iron oxide coated mica, titanium iron oxide coated mica, aluminum, brass, copper, silica, aluminum oxide and the like or any combination thereof.

Illustrative examples of the extender include but are not limited to aluminum silicate clays, talc, diatomaceous earth, silica, polymer microbeads, zinc oxide, barium sulfate, calcium carbonate, mica and the like or any combination thereof.

Illustrative examples of the dye include but are not limited to azo or azo condensed, a metal complex, benzimidazolones, azomethines, methines such as cyanines, azacarbocyanines, enamines, hemicyanines, streptocyanines, styryls, zeromethines, mono-, di-, tri-, and tetraazamethine; caratenoids, arylmethane such as diarylmethanes and triarylmethanes; xanthenes, thioxanthenes, flavanoids, stilbenes, coumarins, acridenes, fluorenes, fluorones, benzodifuranones, formazans, pyrazoles, thiazoles, azines, diazines, oxazines, dioxazines, triphenodioxazines, phenazines, thiazines, oxazones, indamines, nitroso, nitro, quinones such as hydroquinones and anthraquinones; rhodamines, phthalocyanines, neutrocyanines, diazahemicyanines, porphyrazines, porphirines, perinones, rylenes, perylenes, pyronins, diketopyrrolopyrroles, indigo, indigoids, thioindigo, indophenols, naphthalimides, indolenes, isoindolines, isoindolinones, iminoisoindolines, iminoisoindolinones, quinacridones, flavanthrones, indanthrones, anthrapyrimidines, quinophthalones, isoviolanthrones, pyranthrones, or any combination thereof.

According to the present technology, a crosslinker, water, an organic solvent, an interfacial active agent, a hardener, an ultraviolet absorber, a thickener, a corrosion inhibitor as well as other additives known to those skilled in the art may be included in the ink or coating composition.

In one embodiment, the ink or coating containing the VMP pigment preparation is an ink. Any ink type is allowed, including solvent borne, waterborne and energy curable inks. If the pigments of the current technology are used in a packaging ink, then they may be used to color both the interior and the exterior of a package or other container. The VMP pigment preparation may be used in any category of ink including but not limited to flexographic, screen, gravure, offset, heat set, litho or ink jet, or any other printing process.

In one embodiment, the ink or coating containing the VMP pigment preparation is a coating. In this case, the VMP pigment preparation of the current technology may be used in any type of paint, including for example refinish and OEM automotive paints, wheel paint, lacquers, interior and exterior architectural paints, spray or aerosol-based paints, and industrial paints.

When forming a film with the ink or coating composition according to the present technology, the ink or coating film can be deposited directly onto a substrate or deposited onto a basecoat layer or the like. A topcoat layer may be further formed on the film prepared for the coating composition.

The present technology has been described in detail, including the preferred embodiments thereof.

## EXAMPLES

The following examples illustrate specific aspects of the present technology and are not intended to limit the scope thereof in any respect and should not be so construed.

### Example 1 (3864-169-6)

64.2 g Benda-Lutz Splendal 6002 (10.9% VMP aluminum in ethyl acetate) (Sun Chemical) was charged into a 250 mL plastic bottle with screw top lid. The VMP pigment slurry was diluted with 57.2 g ethanol and mixed. The mixture was centrifuged at 2500 RPM for 30 minutes. 57.2 g of the supernatant was removed. An additional of 57.2 g ethanol was added to the bottle, and mixed well with the pellet and remaining supernatant. The mixture was centrifuged at 2500 RPM and 57.2 g of supernatant was removed. At this point 0.35 g Disperbyk 111 (BYK) was added to the remaining slurry. The mixture was well blended to yield a slurry of treated 10% VMP pigment in 90% 3:1 ethanol:ethyl acetate. The type of pigment, pigment loading in the slurry, final solvent composition, and additive dispersant used is reported in Table 1.

**Example 2 (3864-77C)**

71.4 g Benda-Lutz Splendal 6002 (9.8% VMP aluminum in ethyl acetate) (Sun Chemical) was charged into a 250 mL plastic bottle with screw top lid. The VMP pigment slurry was diluted with 64.4 g ethanol and mixed. The mixture was centrifuged at 2500 RPM for 30 minutes. 64.4 g of the supernatant was removed. An additional of 64.4 g ethanol was added to the bottle, and mixed well with the pellet and remaining supernatant. The mixture was centrifuged at 2500 RPM and 64.4 g of supernatant was removed. At this point 0.7 g SFD-R255 (Sun Chemical) was added to the remaining slurry. The mixture was well blended to yield a slurry of treated 10% VMP pigment in 90% 3:1 ethanol:ethyl acetate. The type of pigment, pigment loading in the slurry, final solvent composition, and additive dispersant used is reported in Table 1.

**Example 3 (3864-95A)**

71.4 g Benda-Lutz Splendal 6002 (9.8% VMP aluminum in ethyl acetate) (Sun Chemical) was charged into a 250 mL plastic bottle with screw top lid. The VMP pigment slurry was diluted with 64.4 g ethanol and mixed. The mixture was centrifuged at 2500 RPM for 30 minutes. 64.4 g of the supernatant was removed. An additional of 64.4 g ethanol was added to the bottle, and mixed well with the pellet and remaining supernatant. The mixture was centrifuged at 2500 RPM and 64.4 g of supernatant was removed. At this point a 0.18 g of Solplus D540 (Lubrizol) was added to the remaining slurry. The mixture was well blended to yield a slurry of treated 10% VMP pigment in 90% 3:1 ethanol:ethyl acetate. The type of pigment, pigment loading in the slurry, final solvent composition, and additive dispersant used is reported in Table 1.

**Example 4 (3864-153-1)**

55.0 g Benda-Lutz Splendal 6002 (10.9% VMP aluminum in ethyl acetate) (Sun Chemical) was charged into a 250 mL plastic bottle with screw top lid. The VMP pigment slurry was diluted with 86.0 g ethanol and mixed. The mixture was centrifuged at 2500 RPM for 30 minutes. 81.0 g of the supernatant was removed. At this point 0.35 g of Solplus D540 (Lubrizol) was added to the remaining slurry. The mixture was well blended to yield a slurry of treated 10% VMP pigment in 90% 3:1 ethanol:ethyl acetate. The type of pigment, pigment loading in the slurry, final solvent composition, and additive dispersant used is reported in Table 1.

**Comparative Example 5 (3864-73 A/B)**

71.4 g Benda-Lutz Splendal 6002 (9.8% VMP aluminum in ethyl acetate) (Sun Chemical) was charged into a 250 mL plastic bottle with screw top lid. The VMP pigment slurry was diluted with 64.4 g ethanol and mixed. The mixture was centrifuged at 2500 RPM for 30 minutes. 64.4 g of the supernatant was removed. An additional of 63.0 g ethanol was added to the bottle, and mixed well with the pellet and remaining supernatant. The mixture was centrifuged at 2500 RPM and 64.4 g of the supernatant was removed. The remaining pellet and supernatant were mixed to yield a slurry of 10% VMP pigment in 90% 3:1 ethanol:ethyl acetate. The type of pigment, pigment loading in the slurry, and final solvent composition is reported in Table 1.

**Example 6 (3864-105C)**

118 g of Benda-Lutz Splendal 6002 (10.2% VMP aluminum in ethyl acetate) (Sun Chemical) was charged into a 250 mL plastic bottle with screw top lid. The VMP pigment slurry was diluted with 60 g of ethyl acetate and mixed. The mixture was centrifuges at 2500 RPM for 30 minutes. 118 g of the supernatant was removed. An additional 60 g of ethyl acetate was added to the bottle, and mixed well with the pellet and remaining supernatant. At this point 1.8g of an additive dispersant was added to the remaining slurry. The mixture was well blended to yield a slurry of treated 15% VMP pigment in 85% ethyl acetate. The type of pigment amount, final solvent composition, and additive dispersant used is reported in Table 1

**Comparative Example 7**

118 g of Benda-Lutz Splendal 6002 (10.2% VMP aluminum in ethyl acetate) (Sun Chemical) was charged into a 250 mL plastic bottle with screw top lid. The VMP pigment slurry was diluted with 60 g of ethyl acetate and mixed. The mixture was centrifuges at 2500 RPM for 30 minutes. 118 g of the supernatant was removed. An additional 60 g of ethyl acetate was added to the bottle, and mixed well with the pellet and remaining supernatant. The mixture was well blended to yield a slurry of treated 15% VMP pigment in 85% ethyl acetate. The type of pigment amount, final solvent composition, and additive dispersant used is reported in Table 1

**Table 1:** Recipes for the individual Competitive (Comp.) and Inventive (Inv.) examples

| Example Name | Type of VMP Pigment | d50 | Final composition of Slurry solvent | % Al (final) | Type of additive Used | Amount of Additive used (g) |
|---|---|---|---|---|---|---|
| Example. 1 | Splendal 6002 | 10.0 | 3:1 Ethanol:Ethyl Acetate | 10 | BYK 111 | 0.35 g |
| Example 2 | Splendal 6002 | 10.0 | 3:1 Ethanol:Ethyl Acetate | 10 | SFD-R255 | 0.70 g |
| Example 3 | Splendal 6002 | 10.0 | 3:1 Ethanol:Ethyl Acetate | 10 | Solplus D540 | .18 g |
| Example 4 | Splendal 6002 | 10.0 | 3:2 Ethanol:Ethyl Acetate | 10 | Solplus D540 | .35 g |
| Comp. Ex. 5 | Splendal 6002 | 10.0 | 3:1 Ethanol:Ethyl Acetate | 10 | n/a | n/a |
| Example 6 | Splendal 6002 | 10.0 | Ethyl Acetate | 15 | Solplus D540 | 1.8 g |
| Comp. Ex. 7 | Splendal 6002 | 10.0 | Ethyl Acetate | 15 | n/a | n/a |

## Example 8 - Viscosity of slurries

To measure the viscosity of the samples, 100g of slurry was transferred to a 2 oz. glass jar and sealed. The sample was shaken for 30 seconds by hand and then allowed to rest for 120 minutes before making the measurement. The viscosity was measured using a Brookfield LVDV-1 Prime viscometer fitted with #4 spindle at a stir speed of 30 rpm. The measurement was recorded after 5 seconds of rotation. The results of the viscosity measurements are reported in Table 2.

**Table 2:** Results of viscosity measurement for the examples.

| Sample | Viscosity (cps) |
|---|---|
| Example 1 | 1260 |
| Example 2 | 599 |
| Example 3 | 679 |
| Example 4 | 439 |
| Comp. Ex. 5 | 3859 |
| Example 6 | 3119 |
| Comp. Ex. 7 | Unable to measure |
| *15% slurry without additive dispersant could not be measured | |

Table 2 shows for examples 1-4, the addition of the dispersant additive results in a substantially lower viscosity for slurries where ethanol is the dominant solvent. When the additive is not used, the slurry viscosity becomes high and non Newtonian, resulting in difficulty handling the slurries. In the case where the additive dispersant is added to ester slurries (Example 7) and the solids are increased, the slurry remains fluid and pourable as opposed to the situation where it is not added (Comparative Example 8), where the slurry becomes pastelike and loses all flowability. Consequently, Comparative Example 8 was impossible to measure by Brookfield viscosity measurements. The lower viscosity and Newtonian behavior of the slurries suggest that if a flexographic ink were to be made from these slurries, it would have fewer print defects, higher hiding, stronger color and the potential to use a lower volume anilox.

**Example 9 - Use of the slurries in an Ink:**

To test this supposition, the following formula was used to make inks from the slurries of Examples 1-6. Comparative example 7 was not used to make an ink because it was too thick to work with effectively.

| | Material | Wt% |
|---|---|---|
| **Part A** | B60H polyvinylbutyrate resin (Kuraray) | 3.3% |
| | Ethanol | 18.3 % |
| | | |
| **Part B** | VMP Pigment | add to 7% VMP Pigment |
| | *Propylene glycol monomethyl ether* | *7.1 %* |
| | *n-propyl acetate* | *balance* |
| | Total | 100.0% |

To make the inks, the components of Part A were mixed together until they were uniform. Once Part A was uniform, then the components of Part B were added and mixed for 30 minutes, With the VMP slurry being either Example 3 or Comparative Example 6. Inks were adjusted using propylene glycol monomethyl ether using a # 2 Zahn cup to print viscosity of 35-40 seconds.

**Ink Evaluation:** Displays were prepared on 4 mil PET stock using a Harper Phantom QD proofer with a 200 line anilox with a cell volume of 6.8 bcm. Samples were allowed to air dry and their appearance was evaluated visually on both front and reverse side. Results are posted in Table 3. The dried VMP inks and analyzed from the reverse side and display a chrome-like mirror effect. In Table 3, a qualitative description of examples 1-6 is reported.

In addition to the visual examination, the transparency and gloss at 20° were measured. The transparency was measured by dividing the L* over a black background by the L* over a white background as described in Equation 3 below.

$$\text{Transparency} = L^*_{black}/L^*_{white} \quad \text{(Equation 3)}$$

As the transparency approaches one, the display is said to become more opaque. was measured using a Datacolor SF600 plus spectrophotometer using a diffuse reflection sphere using D65 light. The gloss was measured using a Rhopoint IQ Goniospectrophotometer. The ideal material will have a maximized transparency and gloss. The values for the transparency and gloss are reported in Table 3.

**Table 3:** Table showing description of appearance of displays made using VMP slurries

| Example | Reverse side | Transparency | Gloss |
|---|---|---|---|
| Example 1 | High gloss finish, little texture | 0.93 | 651.9 |
| Example 2 | Exceptionally smooth mirror | 0.95 | 618.3 |
| Example 3 | Good mirror. Some small defects | 0.88 | 574.2 |
| Example 4 | Excellent mirror. Reflection is clear | 0.90 | 602.8 |
| Comp. Ex. 5 | Some mirror, highly textured appearance | 0.89 | 560 . 7 |
| Example 6 | High gloss finish, little texture | 0.93 | 625.6 |

Table 3 shows the visual assessment of the printed and reverse sides of the displays described above as well as the transparency and gloss. Comparative Example 5 gives a mottled mirror finish that has a high degree of graininess. Even though it is mirror-like it is mottled. When compared to the other samples, Comparative Example 3 has close to the lowest transparency and the lowest gloss. In contrast, Examples 1, 2, and 4 all have better opacity and gloss. Moreover, each of these samples has an excellent mirror finish with few visible defects. Example 3 has a transparency and gloss that is on par with Comparative Example 5, however, even for this sample, the mirror finish is smooth and has less defects. Finally, Example 6, has an appearance, on par with Example 2, which is impressive, considering that with its analogue, Comparative Example 7, it was impossible to make an ink.

**Claims**

1. A VMP pigment slurry comprising:

   a. one or more VMP pigments,
   b. one or more solvents, wherein the solvent is selected from the group consisting of esters, alcohol and blends thereof,
   c. one or more dispersing additives represented by the following equation:

$$A_lB_mX_nR_p \text{ (equation 1)}$$

   where A is an optional conjugate acid to a moiety, B, that has a negative charge or a lone pair of electrons; R is a tail group that aids in dispersion; X is a linker that covalently connects moiety B to tail group R; 1 is the number of conjugate acid A and is equal to the valency of moiety B times the number, m, of moiety B divided by the valency of the conjugate acid; n is the number of linker molecules X; and p is the number of tail groups R;
   A is any cationic species selected from $H^+$, $Li^+$, $Na^+$, $K^+$, $Rb^+$, $Cs^+$, $Ag^+$, $Cu^+$, $NH_4^+$, $(CH_3)_4N^+$, $Mg^{2+}$, $Ca^{2+}$, $Sr^{2+}$, $Ba^{2+}$, $Zn^{2+}$, $Cd^{2+}$, $Co^{2+}$ $Cu^{2+}$, $Fe^{2+}$, $Mn^{2+}$, $Ni^{2+}$, $Sn^{2+}$, $Hg^{2+}$, $Pb^{2+}$, $Al^{3+}$, $Cr^{3+}$, $Fe^{3+}$ or mixtures thereof;
   moiety B is selected from primary aliphatic amines, primary aromatic amine, secondary amines, tertiary amines, alcohol, ketone, carboxylates, phosphate, phosphite, sulfate, sulfite, hydroxyl, or nitro groups;
   tail group R is a linear, branched, or dendritic polymer chain with a molecular weight in the range of 100 g/mol to 5,000,000 g/mol selected from poly(ethylene), poly(propylene), poly(butylene), poly(isobutylene), poly(isoprene), poly(acetal), poly(ethylene glycol), poly(propylene glycol), poly(butylene glycol), poly(methylmethacrylate), poly(dimethylsiloxane), poly(vinylalcohol), poly(styrene), poly(maleic anhydride), poly(ethylmethacrylate), poly(isobutylmethacrylate), poly(methacrylate), poly(butylmethacrylate), poly(n-butylmethacrylate), poly(vinyl butyrate), poly(vinyl chloride), polysiloxane, and mixtures or random, block, or alternating copolymers thereof;
   linker X is either a small molecule selected from C1-C20 alkyl groups, arylene, alkylarylene, arylalkylene, alkylineamino, alkylineimino, alkyleneoxyalkylene, aryleneoxy, aryleneoxyalkylene, oxaalkylene, oxyalkylene, dioxy alkylene, oxyarylene, or heterocycle, or a polymer.

2. The slurry of claim 1, wherein the one or more VMP pigments are selected from the group consisting of aluminum, copper, zinc, chromium, bronze, brass, silver, gold, titanium, steel, iron, magnesium, nickel, tin, copper-zinc alloys, copper-tin alloys, copper-aluminum alloys, aluminum-zinc alloys, zinc-magnesium alloys, and mixtures and alloys of any of the preceding.

3. The slurry of claim 1, wherein the one or more VMP pigments comprises aluminum or aluminum alloys.

4. The slurry of claim 1, wherein the one or more VMP pigments has a coating selected from the group consisting of organic and inorganic components or a mixture thereof.

5. The slurry of claim 1, wherein the VMP pigment(s) is present in an amount of about 1-40%.

6. The slurry of claim 1, wherein the dispersing additive(s) is present in an amount of 1-50%, with respect to the total weight of VMP pigment.

7. The slurry of claim 6, wherein the dispersing additive(s) is present in an amount of 2-15%, with respect to the total weight of VMP pigment.

8. The slurry of claim 1, wherein the dispersing additive comprises a Lewis Base head group and a glycol ether tail.

9. The slurry of claim 1, further comprising one or more binders.

10. The slurry of claim 9, wherein the one or more binders is selected from the group consisting of poly(esters), poly(urethanes), poly(vinyls), poly(ethylenes), poly(propylenes), celluloses, poly(vinyl butyrates), poly(maleic anhydrides), poly(styrenes), cellulose acetates, cellulose acetate propionates, cellulose acetate butyrates, poly(vinyl alcohols), poly(amides), nitrocelluloses, acrylics, alkyds, fluorinated resins or any mixture, or block, random or alternating copolymer, thereof.

11. The slurry of claim 1, wherein the ester solvent is selected from the group consisting of methyl acetate, ethyl acetate, n-propyl acetate, 1-propyl acetate, isopropyl acetate, n-butyl acetate, isobutyl acetate, sec-butyl acetate, tert-butylacetate, ethyl butyrate, ethyl lactate, hexyl acetate, isoamyl acetate, methyl propionate, and mixtures and blends thereof.

12. The slurry of claim 1, wherein the alcohol solvent is selected from the group consisting of methanol, ethanol, n-propanol, 1-propanol, isopropanol, n-butanol, 1-butanol, 2-butanol, isobutanol, tert-butanol, benzyl alcohol, ethylene glycol, diethylene glycol, 2-ethylhexanol, glycerol, methyl carbitol, 2-methyl-1-butanol, 3-methyl-2-butanol, 1,2-propanediol, 1,3-propane diol, propylene glycol, propylene glycol monomethyl ether, propylene glycol monomethyl ether acetate, propylene glycol mono-n-propyl ether, propylene glycol mono-n-butyl ether, propylene glycol mono-t-butyl ether, propylene glycol monophenyl ether, dipropylene glycol monomethyl ether, dipropylene glycol monomethyl ether acetate, dipropylene glycol dimethyl ether, dipropylene glycol mono-n-butyl ether, dipropylene glycol mono-t-butyl ether, dipropylene glycol mono-n-propyl ether, tripropylene glycol monomethyl ether, tripropylene glycol mono-n-propyl ether, tripropylene glycol mono-n-butyl ether and mixtures and blends thereof.

13. The slurry of claim 1, further comprising an additional solvent selected from the group consisting of water, acetone, methyl ethyl ketone, tetrahydrofuran, diacetone alcohol, morpholine, isophorone, mesityl oxide, methyl isobutyl ketone, pentane, hexane, cyclohexane, heptane, octane, nonane, decane, kerosene, gasoline, mineral spirits, mineral oil, toluene, xylene, 2-butanone, diethyl ether, diethylene glycol dimethyl ether, nitromethane, triethyl amine, pyridine, and mixtures and blends thereof.

14. The slurry of claim 1, further comprising one or more additional additives.

15. The slurry of claim 14 wherein the one or more additional additives are selected from the group consisting of codispersants, cosolvents, organic pigments, inorganic pigments, pearlescent pigments, metallic pigments, emulsifiers, thickeners, rheology modifiers, coalescing agents, waxes, resins, binders, varnishes, fillers.

16. A finished ink or coating comprising the slurry of any one of claims 1-15, wherein the VMP is present in an amount of 0.1-15% by weight of the total weight of the ink or coating.

17. A printed article comprising the finished ink or coating of claim 16.


**Patentansprüche**

1. VMP-Pigment-Aufschlämmung, umfassend:

    a. ein oder mehrere VMP-Pigmente,
    b. ein oder mehrere Lösungsmittel, wobei das Lösungsmittel aus der Gruppe bestehend aus Estern, Alkoholen und Blends davon ausgewählt ist,
    c. ein oder mehrere Dispergieradditive, die durch die folgende Gleichung wiedergegeben werden:

$$A_l B_m X_n R_p \quad \text{(Gleichung 1)}$$

wobei A für eine fakultative konjugierte Säure zu einer Gruppierung B, die eine negative Ladung oder ein einsames Elektronenpaar aufweist, steht; R für eine Schwanzgruppe steht, die die Dispersion unterstützt; X für einen Linker steht, der die Gruppierung B kovalent mit der Schwanzgruppe R verbindet; l für die Zahl der konjugierten Säure A steht und gleich der Wertigkeit der Gruppierung B multipliziert mit der Zahl m der Gruppierung B dividiert durch die Wertigkeit der konjugierten Säure ist; n für die Zahl der Linkermoleküle X steht und p für die Zahl der Schwanzgruppen R steht; A für eine beliebige kationische Spezies steht, die aus $H^+$, $Li^+$, $Na^+$, $K^+$, $Rb^+$, $Cs^+$, $Ag^+$, $Cu^+$, $NH_4^+$, $(CH_3)_4N^+$, $Mg^{2+}$, $Ca^{2+}$, $Sr^{2+}$, $Ba^{2+}$, $Zn^{2+}$, $Cd^{2+}$, $Co^{2+}$, $Cu^{2+}$, $Fe^{2+}$, $Mn^{2+}$, $Ni^{2+}$, $Sn^{2+}$, $Hg^{2+}$, $Pb^{2+}$, $Al^{3+}$, $Cr^{3+}$, $Fe^{3+}$ oder Mischungen davon ausgewählt ist;

Gruppierung B aus primären aliphatischen Amin-, primären aromatischen Amin-, sekundären Amin-, tertiären Amin-, Alkohol-, Keton-, Carboxylat-, Phosphat-, Phosphit-, Sulfat-, Sulfit-, Hydroxyl- oder Nitrogruppen ausgewählt ist;

die Schwanzgruppe R eine lineare, verzweigte oder dendritische Polymerkette mit einem Molekulargewicht im Bereich von 100 g/mol bis 5.000.000 g/mol ist, die aus Poly(ethylen), Poly(propylen), Poly(butylen), Poly(isobutylen), Poly(isopren), Poly(acetal), Poly-(ethylenglykol), Poly(propylenglykol), Poly-(butylenglykol), Poly(methylmethacrylat), Poly-(dimethylsiloxan), Poly(vinylalkohol), Poly-(styrol), Poly(maleinsäureanhydrid), Poly-(ethylmethacrylat), Poly(isobutylmethacrylat), Poly(methacrylat), Poly(butylmethacrylat), Poly(n-butylmethacrylat), Poly(vinylbutyrat), Poly(vinylchlorid), Polysiloxan und Mischungen oder statistischen, blockartig aufgebauten oder alternierenden Copolymeren davon ausgewählt ist;

der Linker X entweder ein kleines Molekül, das aus C1-C20-Alkylgruppen, Arylen, Alkylarylen, Arylalkylen, Alkylenamino, Alkylenimino, Alkylenoxyalkylen, Arylenoxy, Arylenoxyalkylen, Oxaalkylen, Oxyalkylen, Dioxyalkylen, Oxyarylen oder Heterocyclus ausgewählt ist, oder ein Polymer ist.

2. Aufschlämmung nach Anspruch 1, wobei das eine bzw. die mehreren VMP-Pigmente aus der Gruppe bestehend aus Aluminium, Kupfer, Zink, Chrom, Bronze, Messing, Silber, Gold, Titan, Stahl, Eisen, Magnesium, Nickel, Zinn, Kupfer-Zink-Legierungen, Kupfer-Zinn-Legierungen, Kupfer-Aluminium-Legierungen, Aluminium-Zink-Legierungen, Zink-Magnesium-Legierungen und Mischungen und Legierungen davon ausgewählt ist bzw. sind.

3. Aufschlämmung nach Anspruch 1, wobei das eine bzw. die mehreren VMP-Pigmente Aluminium oder Aluminiumlegierungen umfasst bzw. umfassen.

4. Aufschlämmung nach Anspruch 1, wobei das eine bzw. die mehreren VMP-Pigmente eine Beschichtung aufweist bzw. aufweisen, die aus der Gruppe bestehend aus organischen und anorganischen Komponenten oder einer Mischung davon ausgewählt ist.

5. Aufschlämmung nach Anspruch 1, wobei das VMP-Pigment bzw. die VMP-Pigmente in einer Menge von etwa 1-40 % vorliegt bzw. vorliegen.

6. Aufschlämmung nach Anspruch 1, wobei das Dispergieradditiv bzw. die Dispergieradditive in einer Menge von 1-50 %, bezogen auf das Gesamtgewicht an VMP-Pigment, vorliegt bzw. vorliegen.

7. Aufschlämmung nach Anspruch 6, wobei das Dispergieradditiv bzw. die Dispergieradditive in einer Menge von 2-15 %, bezogen auf das Gesamtgewicht an VMP-Pigment, vorliegt bzw. vorliegen.

8. Aufschlämmung nach Anspruch 1, wobei das Dispergieradditiv eine Lewis-Base-Kopfgruppe und einen Glykolether-Schwanz umfasst.

9. Aufschlämmung nach Anspruch 1, ferner umfassend ein oder mehrere Bindemittel.

10. Aufschlämmung nach Anspruch 9, wobei das eine Bindemittel bzw. die mehreren Bindemittel aus der Gruppe bestehend aus Poly(estern), Poly-(urethanen), Poly(vinylen), Poly(ethylenen), Poly-(propylenen), Cellulosen, Poly(vinylbutyraten), Poly(maleinsäureanhydriden), Poly(styrolen), Celluloseacetaten, Celluloseacetatpropionaten, Celluloseacetatbutyraten, Poly(vinylalkoholen), Poly(amiden), Nitrocellulosen, Acrylverbindungen, Alkyden, fluorierten Harzen oder einer Mischung oder einem blockartig aufgebauten, statistischen oder alternierenden Copolymer davon ausgewählt ist bzw. sind.

11. Aufschlämmung nach Anspruch 1, wobei das Ester-Lösungsmittel aus der Gruppe bestehend aus Essigsäuremethylester, Essigsäureethylester, Essigsäure-n-propylester, Essigsäure-l-propylester, Essigsäureisopropylester, Essigsäure-n-butylester, Essigsäureisopropylester, Essigsäuresec-butylester, Essigsäure-tert-butylester, Buttersäureethylester, Milchsäureethylester, Essigsäurehexylester, Essigsäureisoamylester, Propionsäuremethylester und Mischungen und Blends davon ausgewählt ist.

12. Aufschlämmung nach Anspruch 1, wobei das Alkohol-Lösungsmittel aus der Gruppe bestehend aus Methanol, Ethanol, n-Propanol, 1-Propanol, Isopropanol, n-Butanol, 1-Butanol, 2-Butanol, Isobutanol, tert-Butanol, Benzylalkohol, Ethylenglykol, Diethylenglykol, 2-Ethylhexanol, Glycerin, Methylcarbitol, 2-Methyl-1-butanol, 3-Methyl-2-butanol, 1,2-Propandiol, 1,3-Propandiol, Propylenglykol, Propylenglykolmonomethylether, Propylenglykolmonomethyletheracetat, Propylenglykolmono-n-propylether, Propylenglykolmono-n-butylether, Propylenglykolmono-t-butylether, Propylenglykolmonophenylether, Dipropylenglykolmonomethylether, Dipropylenglykolmonomethyletheracetat, Dipropylenglykoldimethylether, Dipropylenglykolmono-n-butylether, Dipropylenglykolmono-t-butylether, Dipropylenglykolmono-n-propylether, Tripropylenglykolmonomethylether, Tripropylenglykolmono-n-propylether, Tripropylenglykolmono-n-butylether und Mischungen und Blends davon ausgewählt ist.

13. Aufschlämmung nach Anspruch 1, ferner umfassend ein zusätzliches Lösungsmittel aus der Gruppe bestehend aus Wasser, Aceton, Methylethylketon, Tetrahydrofuran, Diacetonalkohol, Morpholin, Isophoron, Mesityloxid, Methylisobutylketon, Pentan, Hexan, Cyclohexan, Heptan, Octan, Nonan, Decan, Kerosin, Benzin, Testbenzin, Mineralöl, Toluol, Xylol, 2-Butanon, Diethylether, Diethylenglykoldimethylether, Nitromethan, Triethylamin, Pyridin und Mischungen und Blends davon.

14. Aufschlämmung nach Anspruch 1, ferner umfassend ein oder mehrere zusätzliche Additive.

15. Aufschlämmung nach Anspruch 14, wobei das eine bzw. die mehreren zusätzlichen Additive aus der Gruppe bestehend aus Codispergiermitteln, Cosolventien, organischen Pigmenten, anorganischen Pigmenten, Perlglanzpigmenten, metallischen Pigmenten, Emulgatoren, Verdickern, Rheologiemodifikatoren, Koaleszenzmitteln, Wachsen, Harzen, Bindemitteln, Firnissen, Füllstoffen ausgewählt ist bzw. sind.

16. Fertige Tinte oder Beschichtung, umfassend die Aufschlämmung nach einem der Ansprüche 1 bis 15, wobei das VMP in einer Menge von 0,1-15 Gew.-% des Gesamtgewichts der Tinte oder Beschichtung vorliegt.

17. Bedruckter Artikel, umfassend die fertige Tinte oder Beschichtung nach Anspruch 16.

**Revendications**

1. Suspension de pigment VMP (Vaccuum Metalized Pigment - pigment métallisé sous vide) comprenant :

    a. un ou plusieurs pigments VMP,
    b. un ou plusieurs solvants, le solvant étant choisi dans le groupe constitué par des esters, un alcool et des mélanges correspondants,
    c. un ou plusieurs additifs dispersants représentés par l'équation suivante :

$$A_l B_m X_n R_p \text{ (équation 1)}$$

    A étant un acide conjugué éventuel d'un fragment, B, qui possède une charge négative ou une paire libre d'électrons ; R étant un groupe de queue qui aide à la dispersion ; X étant un lieur qui relie de manière covalente le fragment B au groupe de queue R ; l étant le nombre d'acide conjugué A et étant égal à la valence du fragment B multiplié par le nombre, m, du fragment B divisé par la valence de l'acide conjugué ; n étant le nombre de molécules de lieur X ; et p étant le nombre de groupes de queue R ;
    A étant une quelconque espèce cationique choisie parmi $H^+$, $Li^+$, $Na^+$, $K^+$, $Rb^+$, $Cs^+$, $Ag^+$, $Cu^+$, $NH_4^+$, $(CH_3)_4N^+$, $Mg^{2+}$, $Ca^{2+}$, $Sr^{2+}$, $Ba^{2+}$, $Zn^{2+}$, $Cd^{2+}$, $Co^{2+}$, $Cu^{2+}$, $Fe^{2+}$, $Mn^{2+}$, $Ni^{2+}$, $Sn^{2+}$, $Hg^{2+}$, $Pb^{2+}$, $Al^{3+}$, $Cr^{3+}$, $Fe^{3+}$ ou des mélanges correspondants ;
    le fragment B étant choisi parmi des groupes amines aliphatiques primaires, amine aromatique primaire, amines secondaires, amines tertiaires, alcool, cétone, carboxylates, phosphate, phosphite, sulfate, sulfite, hydroxyle, ou nitro ;
    le groupe de queue R étant une chaîne polymère linéaire, ramifiée, ou dendritique comportant un poids moléculaire dans la plage de 100 g/mole à 5 000 000 g/mole choisie parmi le polyéthylène, le polypropylène, le polybutylène, le polyisobutylène, le polyisoprène, le polyacétal, le polyéthylèneglycol, le polypropylèneglycol, le polybutylèneglycol, le poly(méthacrylate de méthyle), le polydiméthylsiloxane, le poly(alcool vinylique), le polystyrène, le poly(anhydride maléique), le poly(méthacrylate d'éthyle), le poly(méthacrylate d'isobutyle), le polyméthacrylate, le poly(méthacrylate de butyle), le poly(méthacrylate de n-butyle), le poly(butyrate de vinyle), le poly(chlorure de vinyle), le polysiloxane, et des mélanges ou des copolymères statistiques, à blocs, ou alternés correspondants ;

le lieur X étant soit une petite molécule choisie parmi des groupes $C_{1-20}$-alkyle, arylène, alkylarylène, arylalkylène, alkylèneamino, alkylèneimino, alkylèneoxyalkylène, arylèneoxy, arylèneoxyalkylène, oxaalkylène, oxyalkylène, dioxyalkylène, oxyarylène, ou hétérocycle, ou un polymère.

2. Suspension selon la revendication 1, le ou les pigment(s) VMP étant choisi(s) dans le groupe constitué par l'aluminium, le cuivre, le zinc, le chrome, le bronze, le laiton, l'argent, l'or, le titane, l'acier, le fer, le magnésium, le nickel, l'étain, les alliages cuivre-zinc, les alliages cuivre-étain, les alliages cuivre-aluminium, les alliages aluminium-zinc, les alliages zinc-magnésium, et des mélanges et des alliages d'un quelconque parmi les précédents.

3. Suspension selon la revendication 1, le ou les pigment(s) VMP comprenant de l'aluminium ou des alliages d'aluminium.

4. Suspension selon la revendication 1, le ou les pigment(s) VMP possédant un revêtement choisi dans le groupe constitué par des composants organiques et inorganiques ou un mélange correspondant.

5. Suspension selon la revendication 1, le ou les pigment(s) VMP étant présent(s) en une quantité d'environ 1 à 40 %.

6. Suspension selon la revendication 1, le ou les additif (s) dispersant (s) étant présent (s) en une quantité de 1 à 50 %, par rapport au poids total du pigment VMP.

7. Suspension selon la revendication 6, le ou les additif (s) dispersant (s) étant présent (s) en une quantité de 2 à 15 %, par rapport au poids total du pigment VMP.

8. Suspension selon la revendication 1, l'additif dispersant comprenant un groupe de tête de type base de Lewis et une queue de type glycoléther.

9. Suspension selon la revendication 1, comprenant en outre un ou plusieurs liants.

10. Suspension selon la revendication 9, le ou les liant(s) étant choisi(s) dans le groupe constitué par les polyesters, les polyuréthanes, les polyvinyles, les polyéthylènes, les polypropylènes, les celluloses, les poly(butyrate de vinyle), les poly(anhydrides maléiques), les polystyrènes, les acétates de cellulose, les propionates acétate de cellulose, les butyrates acétate de cellulose, les poly(alcools vinyliques), les polyamides, les nitrocelluloses, les acryliques, les alkydes, les résines fluorées ou un quelconque mélange, ou copolymère à blocs, statistique ou alterné, correspondant.

11. Suspension selon la revendication 1, le solvant de type ester étant choisi dans le groupe constitué par l'acétate de méthyle, l'acétate d'éthyle, l'acétate de n-propyle, l'acétate de 1-propyle, l'acétate d'isopropyle, l'acétate de n-butyle, l'acétate d'isobutyle, l'acétate de sec-butyle, l'acétate de tert-butyle, le butyrate d'éthyle, le lactate d'éthyle, l'acétate d'hexyle, l'acétate d'isoamyle, le propionate de méthyle, et des mélanges et des associations correspondant(e)s.

12. Suspension selon la revendication 1, le solvant de type alcool étant choisi dans le groupe constitué par le méthanol, l'éthanol, le n-propanol, le 1-propanol, l'isopropanol, le n-butanol, le 1-butanol, le 2-butanol, l'isobutanol, le tert-butanol, l'alcool benzylique, l'éthylèneglycol, le diéthylèneglycol, le 2-éthylhexanol, le glycérol, le méthylcarbitol, le 2-méthyl-1-butanol, 3-méthyl-2-butanol, le 1,2-propanediol, le 1,3-propanediol, le propylèneglycol, le propylèneglycol monométhyléther, l'acétate de propylèneglycol monométhyléther, le propylèneglycol mono-n-propyléther, le propylèneglycol mono-n-butyléther, le propylèneglycol mono-t-butyléther, le propylèneglycol monophényléther, le dipropylèneglycol monométhyléther, l'acétate de dipropylèneglycol monométhyléther, le dipropylèneglycol diméthyléther, le dipropylèneglycol mono-n-butyléther, le dipropylèneglycol mono-t-butyléther, le dipropylèneglycol mono-n-propyléther, le tripropylèneglycol monométhyléther, le tripropylèneglycol mono-n-propyléther, le tripropylèneglycol mono-n-butyléther et des mélanges et des associations correspondant(e)s.

13. Suspension selon la revendication 1, comprenant en outre un solvant supplémentaire choisi dans le groupe constitué par l'eau, l'acétone, la méthyléthylcétone, le tétrahydrofuranne, le diacétone alcool, la morpholine, l'isophorone, l'oxyde de mésityle, la méthylisobutylcétone, le pentane, l'hexane, le cyclohexane, l'heptane, l'octane, le nonane, le décane, le kérosène, l'essence, le white-spirit, une huile minérale, le toluène, le xylène, la 2-butanone, le diéthyléther, le diéthylèneglycol diméthyléther, le nitrométhane, la triéthylamine, la pyridine, et des mélanges et des associations correspondant(e)s.

**14.** Suspension selon la revendication 1, comprenant en outre un ou plusieurs additifs supplémentaires.

**15.** Suspension selon la revendication 14, le ou les additif(s) supplémentaire(s) étant choisi(s) dans le groupe constitué par les co-dispersants, les co-solvants, les pigments organiques, les pigments inorganiques, des pigments perlés, les pigments métalliques, les émulsifiants, les épaississants, les modificateurs de rhéologie, les agents coalescents, les cires, les résines, les liants, les vernis, les charges.

**16.** Encre ou revêtement fini(e) comprenant la suspension selon l'une quelconque des revendications 1 à 15, le VMP étant présent en une quantité de 0,1 à 15 % en poids du poids total de l'encre ou du revêtement.

**17.** Article imprimé comprenant l'encre ou le revêtement fini(e) selon la revendication 16.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014042639 A1